Europäisches Patentamt

European Patent Office

Office européen des brevets

(19)

(11) Numéro de publication: **0 246 151 B1**

(12) **FASCICULE DE BREVET EUROPEEN**

(45) Date de publication de fascicule du brevet:
**18.09.91**

(21) Numéro de dépôt: **87401059.8**

(22) Date de dépôt: **11.05.87**

(51) Int. Cl.⁵: **B01D 45/06, B01D 45/08**

(54) **Séparateur à ailettes pour la séparation de particlues liquides.**

(30) Priorité: **14.05.86 FR 8606939**

(43) Date de publication de la demande:
**19.11.87 Bulletin 87/47**

(45) Mention de la délivrance du brevet:
**18.09.91 Bulletin 91/38**

(84) Etats contractants désignés:
**AT BE CH DE ES GB LI NL SE**

(56) Documents cités:
**EP-A- 0 176 420**
**DE-A- 1 619 839**
**DE-A- 2 736 239**

(73) Titulaire: **FRAMATOME**
**Tour Fiat 1, Place de la Coupole**
**F-92400 Courbevoie(FR)**

(72) Inventeur: **Holcblat, Alain**
**32-34 Rue Horace Vernet**
**F-92130 Issy les Moulineaux(FR)**

(74) Mandataire: **Fort, Jacques et al**
**CABINET PLASSERAUD 84, rue d'Amsterdam**
**F-75009 Paris(FR)**

Rank Xerox (UK) Business Services

## Description

La présente invention concerne un séparateur de particules liquides entrainées dans un courant gazeux du type comprenant une enceinte dans laquelle sont disposées à intervalles égaux des parois parallèles présentant une configuration en zigzag délimitant entre elles des canaux de circulation du courant gazeux.

Elle concerne plus particulièrement un séparateur dont les parois comportent des ailettes recouvrant chaque coude dirigé vers l'intérieur du canal, chaque ailette formant avec la paroi porteuse une écope ouverte face à l'écoulement gazeux.

Elle trouve une application particulièrement importante, bien que non exclusive, dans le domaine des "sécheurs fins" appliqués aux générateurs de vapeur à circulation naturelle des réacteurs de l'industrie nucléaire.

On connait déjà des séparateurs gaz-liquide du type ci-dessus défini. Le document FR-A-1 541 045 concernant un dispositif pour séparer du liquide d'un fluide gazeux montre une architecture de séparateur où des parois ou "éléments d'aubage" sont agencées de telle façon qu'elles présentent une série régulière de sommets et de creux successifs. Des ailettes s'étendent chacune depuis un sommet en direction de l'écoulement gazeux, et permettent de capter ou de piéger le liquide.

Ce type de séparateur, s'il permet un bon rendement de séparation pour un spectre de goutte supérieur au diamètre de la goutte limite à prendre en compte, possède l'inconvénient de présenter des pertes de charge importantes pour un débit donné.

La présente invention vise à fournir un séprarateur du type ci-dessus défini, répondant mieux que ceux antérieurement connus aux exigences de la pratique, notamment en ce qu'il permet des rendements de séparation liquide-gaz élevés pour un diamètre de goutte limite donné, tout en présentant des pertes de charge faibles.

L'invention propose un séparateur, caractérisé en ce que les ailettes d'un même canal délimitent avec les parois respectivement opposées à chaque ailette une section de passage du courant gazeux qui reste sensiblement constante tout au long du parcours du dit courant gazeux dans le canal.

Dans ce but, l'invention propose notamment un séparateur du type ci-dessus défini, caractérisé en ce que chaque ailette est parallèle à la paroi qui la porte et est espacée de ladite paroi en amont et en aval du coude recouvert par ladite ailette, se prolonge par une zone arrière de raccordement rejoignant progressivement la paroi portant ladite ailette et se raccorde à ladite paroi à peu près au droit du bord d'attaque par le courant gazeux de l'ailette suivante du canal.

Dans un mode de réalisation avantageux, chaque coude des parois en zigzag est constitué par un pli unique.

On peut, par ailleurs, avoir recours à la disposition suivante: chaque ailette est fixée sur la paroi par une partie coudée qui épouse la forme de ladite paroi sur une longueur anglobant le coude d'angle obtus succédant au coude dirigé vers l'intérieur du canal et recouvert par ladite ailette. Dans certains cas, chaque pli formant un coude de paroi en zigzag constituera un dièdre à angle vif.

De façon à pouvoir assembler de manière aisée les différentes parois en zigzag, on peut avoir recours à la disposition avantageuse suivante : chaque paroi en zigzag est munie d'au moins quatre éléments d'entretoise disposés en bordure des dites parois, chacun comportant une partie trouée d'un côté et un téton de l'autre ; les tétons des éléments d'entretoise d'une paroi étant destinés à s'insérer dans les parties trouées de la paroi adjacente.

Ceci assure un espacement régulier entre les parois.

Cet espacement est déterminé de façon à empêcher un passage direct du courant gazeux entre deux parois munies d'ailettes. Le maintien en place des différentes parois peut, sans que cela soit nullement limitatif, être effectué par une disposition de réalisation avantageuse du type suivant : les parois en zigzag sont serrées entre deux plaques dont l'une prend appui sur une première paroi de l'enceinte, et l'autre est repoussée par l'extrémité de vis dont le filetage prend appui sur la paroi de l'enceinte opposée à la première, les têtes des vis étant entretoisées par des barrettes.

L'invention sera mieux comprise à la lecture de la description qui suit d'un mode particulier de réalisation, donné à titre d'exemple non limitatif. La description se réfère aux dessins qui l'accompagnent, dans lesquels :

- la figure 1 est une vue schématique en coupe verticale de la partie supérieure d'un générateur de vapeur d'un réacteur nucléaire à eau sous pression renfermant des séparateurs du type décrit dans l'invention.
- la figure 2 est une vue en coupe suivant II-II de la figure 1 d'un séparateur selon l'invention.
- la figure 3 est une vue en coupe suivant III-III de la figure 1 d'un séparateur selon l'invention.
- la figure 4 est une vue à grande échelle montrant le détail d'un canal séparant deux parois munies d'ailettes du séparateur suivant l'invention.

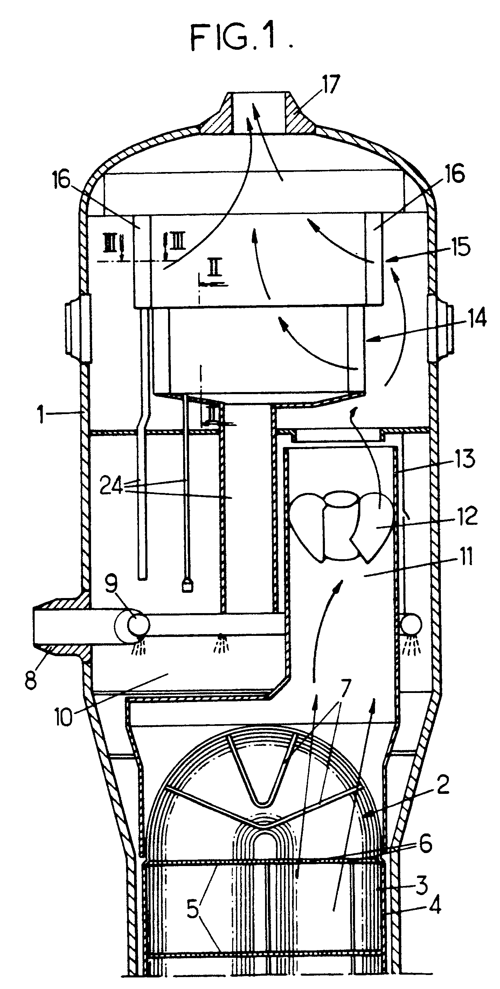

La figure 1 montre schématiquement en coupe la partie supérieure d'un générateur de vapeur équipant chaque boucle du circuit de refroidissement d'un réacteur à eau sous pression.

Le générateur de vapeur comprend une enveloppe 1, un ensemble évaporateur 2 constitué par un faisceau de tubes 3 (partiellement représentés) disposés en U renversé et parcourus par l'eau primaire sous pression qui vient de la cuve du réacteur et qui pénètre dans le générateur et en ressort par le bas du générateur (non représenté).

Ces tubes 3 sont montés dans une virole cylindrique 4, à travers des plaques entretoises 5 percées de trous 6 dont une partie permet le passage des tubes 3 et sert à leur maintien.

Des entretoises antivibratoires 7 maintiennent par ailleurs les tubes 3 dans leur partie coudée. L'eau du circuit secondaire, à vaporiser pour entraîner une turbine est introduite dans le générateur par une tubulure d'entrée 8 et répartie sur le pourtour de l'appareil par l'anneau d'alimentation 9 dans la zone 10 d'alimentation en eau.

Le générateur comprend par ailleurs en partie haute, au moins un séparateur d'humidité à cyclone 11 de type connu, comprenant une hélice 12 et une paroi cylindrique 13.

Au-dessus des séparateurs d'humidité à cyclone sont disposés deux étages 14 et 15 de séparateurs selon l'invention, constitués chacun par quatre séparateurs 16 selon l'invention, formant les faces verticales de deux parallélépipèdes dont l'intérieur s'ouvre sur la tubulure 17 de sortie de la vapeur du générateur.

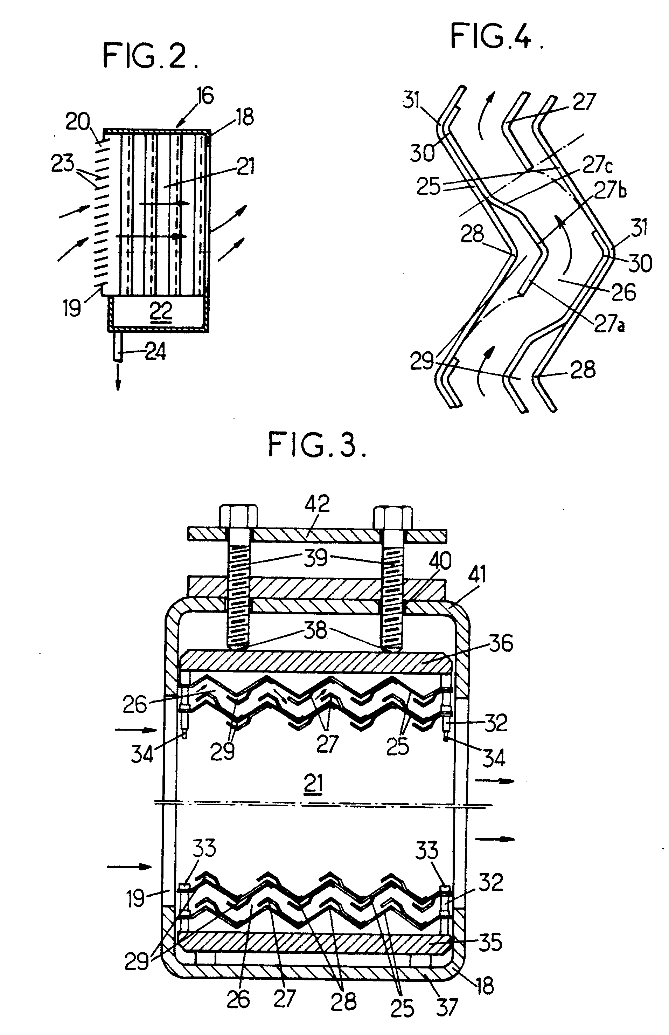

On voit sur les figures 2 et 3 qui représentent le séparateur 16 respectivement en coupe verticale et en coupe horizontale que le séparateur comprend une enceinte 18 muni d'une cloison d'entrée 19 comportant des trous 20 et/ou des volets d'orientation fixes 23 des filets du courant de vapeur pénétrant dans le séparateur 16.

Sous la zone de séparation 21 eau-vapeur, est disposée une zone de récupération 22 de l'eau. Celle-ci est évacuée par des tubes 24 qui débouchent dans la zone d'alimentation 10 en eau générateur.

La zone de séparation 21 comprend des parois parallèles 25 présentant une configuration en zigzag et délimitant entre elles des canaux de circulation 26 de la vapeur. Les zigzags sont formés par pliage de plaques métalliques.

Les parois 25 portent des ailettes 27 selon l'invention, recouvrant chaque coude 28 dirigé vers l'intérieur du canal. Les coudes constituant des dièdres à angle vif. Chaque ailette forme une écope 29 ouverte face à l'écoulement gazeux.

Sur la figure 3, et pour simplifier, seules quatre parois ont été représentées.

Chaque ailette 27 (Fig.4) présente deux portions 27a et 27b parallèles à la paroi 25 qui la porte en amont 27a et en aval 27 b du coude 28 recouvert ; Elle se prolonge par une zone arrière

27c de raccordement rejoignant progressivement la paroi 25 et s'y raccorde à peu près au droit du bord d'attaque de l'ailette suivante. Un trait mixte (Fig.4) joignant le point de raccordement de ailette 27 avec le bord d'attaque de l'ailette suivante a été tracé pour illustrer cette disposition.

Sans que cela ne soit en rien limitatif, le point de raccordement se situe approximativement au milieu de la distance séparant deux plis d'une paroi en zigzag.

La section de passage entre ailettes et parois qui est sensiblement constante tout au long du parcours du courant gazeux dans un canal peut avantageusement représenter les 3/5 environ de la section totale du canal. La zone arrière 27c de l'ailette 27 favorise par ailleurs le guidage des filets gazeux. Les pertes de charge enregistrées avec une telle disposition sont plus faibles que celles obtenues avec les dispositifs de l'art antérieur, comportant des écopes ouvertes face à l'écoulement gazeux.

Chaque ailette 27 (figure 4) est fixée sur une paroi 25 par une partie coudée 30 prolongeant la zone arrière 27c qui épouse la forme de la paroi sur une longueur englobant le coude d'angle obtus 31 succédant au coude 28 dirigé vers l'intérieur du canal 26 et recouvert par l'ailette 27. Un tel dispositif présente des avantages importants lors du montage des ailettes 27 sur les parois 25 où elles sont fixées par exemple par soudure. Cette forme garantit une mise en place précise de l'ailette et donc une section d'entrée bien déterminée de l'écope 29 face au courant gazeux, paramètre important pour l'obtention d'une efficacité optimale.

Sur la figure 3, chaque paroi en zigzag 25 est munie d'au moins quatre éléments d'entretoisement 32 disposés en bordure des parois, chacun comportant une partie trouée 33 d'un côté, et un téton 34 de l'autre côté ; les tétons 34 des éléments d'entretoisement 32 d'une paroi étant destinés à s'insérer dans les parties trouées 33 de la paroi 25 adjacente.

Les parois en zigzag 25 sont serrées entre deux plaques (35, 36) dont l'une 35 prend appui sur une première paroi 37 de l'enceinte 18 et l'autre est repoussée par l'extrémité 38 de vis 39 dont le filetage 40 prend appui sur la paroi 41 de l'enceinte 18 opposée à la paroi 37.

Les têtes des vis 39 sont entretoisées par une barrette 42. Les vis sont disposées en nombre suffisant pour assurer une compression homogène des parois en zigzag.

Le fonctionnement du générateur de vapeur comportant des séparateurs 16 du type décrit dans l'invention, est explicité ci-après.

L'eau du circuit primaire du réacteur circule à l'intérieur des tubes 3 de l'ensemble évaporateur, l'eau du circuit secondaire du réacteur circulant à l'extérieur des tubes 3. L'eau du circuit secondaire pénètre par la tubulure d'entrée 8 et est répartie sur le pourtour de l'intérieur du générateur par l'anneau 9.

Cette eau descend le long de l'enveloppe externe 1, entre l'enveloppe 1 et la virole cylindrique 4 et remonte par circulation naturelle au travers du faisceau de tubes 3 en se vaporisant au contact des tubes 3 où circule l'eau primaire et en passant par des trous 6 dont une partie a été ménagée à cet effet dans les plaques entretoises 5.

Les trajets suivis ensuite par l'émulsion eau-vapeur sortant de l'ensemble évaporateur 2 sont indiqués par des flèches en trait fin sur la figure 1.

La vapeur saturée commence par passer dans les séparateurs d'humidité à cyclone 11 de type connu, comprenant l'hélice 12 et une paroi cylindrique 13.

Par extraction centrifuge due au trajet hélicoïdal forcé imposé à la vapeur, une partie des goutelettes d'eau transportées par celle-ci se dépose sur la surface interne de la paroi 13 et passe dans la zone d'alimentation 10 en eau.

Cette eau se mélange à l'eau d'alimentation arrivant par la tubulure 8 et la réchauffe partiellement.

La vapeur, toujours suivant les trajets indiqués par des flèches en trait fin (voir également figures 2, 3 et 4) pénètre dans les séparateurs 16 par la périphérie (placée du côté de l'enveloppe du générateur) de ces équipements en un courant ascendant, traverse les séparateurs et sort du générateur par la tubulure centrale 17 de sortie de la vapeur.

Lors de la traversée des séparateurs 16, les particules liquides contenues dans le courant gazeux sont piégées par les écopes 29. Grâce au dispositif de l'invention, et même lorsque le débit de courant gazeux est faible, les particules fines sont arrêtées. Ce meilleur piégeage à faible débit est dû au double changement de direction du flux pour chaque face de même direction des parois en zigzag et à la conservation d'une section de passage constante donnant une vitesse sans variations brusques.

La conservation de cette section de passage est mise en exergue par un trait mixte sur la figure 4.

L'eau ainsi récupérée descend le long des ailettes 27. La zone interne arrière de l'écope 29 ou gouttière, située en aval du coude 28, étant relativement à l'abri du courant gazeux et de ses perturbations, le risque de réentraînement est minimisé. En effet, si l'eau captée par la paroi chemine vers le fond de la gouttière coudée, cette disposition apporte une protection des fines particules vis à vis d'un réentraînement par la vapeur. Par ailleurs, la section de descente de l'eau captée est importante, ce qui améliore la capacité de drainage. L'eau tombe par gravité dans la zone de récupération 22 du séparateur 16 est évacuée par les tubulures 24 qui débouchent dans la zone d'alimentation 10 en eau du générateur.

## Revendications

1. Séparateur de particules liquides entraînées dans un courant gazeux comprenant une enceinte (1) dans laquelle sont disposées à intervalles égaux des parois parallèles (25) présentant une configuration en zigzag, délimitant entre elles des canaux (26) de circulation du courant gazeux, les dites parois portant des ailettes (27) recouvrant chacune un coude (28) dirigé vers l'intérieur du canal (26), chaque ailette (27) formant avec la paroi porteuse (25) une écope (29)ouverte face à l'écoulement gazeux, caractérisé en ce que les ailettes (27) d'un même canal (26) délimitent avec les parois (25) en regard une section de passage du courant gazeux qui reste sensiblement constante tout au long du parcours du dit courant gazeux dans le canal (26).

2. Séparateur selon la revendication 1, caractérisé en ce que chaque ailette présente une portion (27a, 27b) parallèle à la paroi (25) qui la porte et espacée de ladite paroi en amont et en aval du coude (28) recouvert par ladite ailette et, se prolonge par une zone arrière (27c) de raccordement rejoignant progressivement la paroi portant ladite ailette et se raccordant à ladite paroi à peu près au droit du bord d'attaque de l'ailette (27) suivante du canal (26).

3. Séparateur selon la revendication 1 ou 2, caractérisé en ce que chaque coude (28) des parois (25) en zigzag est constitué par un pli unique.

4. Séparateur selon la revendication 1, 2 ou 3, caractérisé en ce que chaque ailette (27) est fixée sur la paroi par une partie coudée (30) qui épouse la forme de ladite paroi sur une longueur englobant le coude (31) d'angle obtus (28) succèdant au coude dirigé vers l'intérieur du canal et recouvert par ladite ailette (27).

5. Séparateur selon la revendication 3, caractérisé en ce que les coudes (28) des parois (25) en zigzag sont des dièdres à angle vif.

6. Séparateur selon l'une quelconque des revendications précédentes, caractérisé en ce que chaque paroi en zigzag est munie d'au moins quatre éléments d'entretoisement (32) disposés en bordure des dites parois, chacun comportant une partie trouée (33) d'un côté et un téton (34) de l'autre, les tétons (34) des éléments d'entretoisement (32) d'une paroi étant destinés à s'insérer dans les parties trouées de la paroi adjacente.

**Claims**

1. Separator of liquid particles entrained in a gas stream, including an enclosure (1) in which parallel walls (25) are disposed at even intervals and have a zig-zag configuration, defining therebetween channels (26) for flow of the gas stream, said walls having fins (27) each covering a bend (28) directed toward the inside of the channel (26), each fin (27) forming with the supporting wall (25) an open scoop (29) facing the gas flow, characterized in that the fins (27) of a same channel (26) define with the opposite walls (25) a flow cross-sectional area for the gas stream which remains substantially constant all along the path of said gas stream in the channel (26).

2. Separator according to claim 1, characterized in that each fin has a portion (27a, 27b) parallel to the wall (25) which supports it and is spaced from said wall upstream and downstream of the bend (28) covered by said fin, and is extended by a rear connection zone (27c) progressively merging with the wall carrying said fin and is connected to said wall substantially in alignment with the leading edge of the following fin (27) in the channel (26).

3. Separator according to claim 1 or 2, characterized in that each bend (28) of the zig-zag walls (25) consists of a single bend.

4. Separator according to claim 1, 2 or 3, characterized in that each fin (27) is fixed to the wall by a bent part (30) which matches the shape of said wall over a length including the bend (31) having an obtuse angle (28) which succeeds the inwardly directed bend (28) of the channel and covered by said fin (27).

5. Separator according to claim 3, characterized in that the bends (28) of the zig-zag walls (25) are sharp angled dihedrons.

6. Separator according to any one of the preceding claims, characterized in that each zig-zag wall is provided with at least four spacer elements (32) disposed at the periphery of said walls, each having an apertured part (33) on one side and a stud (34) on the other side, the studs (34) of the spacer elements (32) of one wall being intended to be inserted into the apertured parts of the adjacent wall.

**Patentansprüche**

1. Abscheider für von einem Gasstrom mitgeführte Flüssigkeitsteilchen, mit einem Behälter (1), in dem in gleichen Abständen zickzackförmige parallele Wände (25) angeordnet sind, welche zwischeneinander Strömungskanäle (26) für den Gasstrom begrenzen, wobei diese Wände Rippen (27) tragen, die jeweils einen zur Innenseite des Kanales (26) gerichteten Knick (28) übergreifen, wobei jede Rippe (27) mit der sie tragenden Wand (25) eine zur Gasströmung hin offene Schöpfschaufel bildet, dadurch gekennzeichnet, daß die Rippen (27) ein und desselben Kanales (26) mit den jeweils gegenüberliegenden Wänden (25) einen Durchtrittsquerschnitt für den Gasstrom bilden, der über die ganze Länge des Weges des Gasstromes durch den Kanal (26) im wesentlichen konstant bleibt.

2. Abscheider nach Anspruch 1, dadurch gekennzeichnet, daß jede Rippe stromaufwärts und stromabwärts des von der Rippe übergriffenen Knickes (28) einen Abschnitt (27a, 27b) aufweist, der zu der ihn tragenden Wand (25) parallel und von dieser Wand in einem Abstand verläuft, wobei sich die Rippe in einer hinteren Verbindungszone (27c) fortsetzt, die fortschreitend zu der diese Rippe tragenden Wand hin verläuft und an diese Wand etwa gegenüber der Angriffskante der nachfolgenden Rippe (27) des Kanales (26) anschließt.

3. Abscheider nach Anspruch 1 oder 2, dadurch gekennzeichnet, daß jeder Knick (28) der Zickzackwände (25) durch eine einfache Biegung gebildet wird.

4. Abscheider nach Anspruch 1, 2 oder 3, dadurch gekennzeichnet, daS jede Rippe (27) an der Wand durch einen abgewinkelten Abschnitt (30) befestigt ist, der sich an die Form dieser Wand über eine Länge anschmiegt, die den Knick (31) stumpfen Winkels (28) einschließt, welcher dem der Innenseite des Kanales zugewandten und von dieser Rippe (27) übergriffenen Knick nachfolgt.

5. Abscheider nach Anspruch 3, dadurch gekennzeichnet, daß die Knicke (28) der Zickzackwände (25) scharfkantige Flächenwinkel sind.

6. Abscheider nach einem der vorhergehenden Ansprüche, dadurch gekennzeichnet, daS jede Zickzackwand mit mindestens vier Abstandselementen (32) versehen ist, die am Rand dieser Wand angeordnet sind und von denen jedes an einer Seite einen gelochten Abschnitt (33) und an der anderen Seite einen Ansatz (34) aufweist, wobei die Ansätze (34) der Abstandselemente (32) einer Wand dazu vorgesehen sind, in die gelochten Abschnitte der benachbarten Wand einzugreifen.

# FIG.1.

# FIG.2.

# FIG.4.

# FIG.3.